# EUROPÄISCHE PATENTSCHRIFT

(11) **EP 0 677 975 B1**
(45) Veröffentlichungstag und Bekanntmachung des Hinweises auf die Patenterteilung: **17.07.2002**
(21) Anmeldenummer: 95103600.3
(22) Anmeldetag: 13.03.1995
(51) Int. Cl.: H04Q 11/04, H04Q 3/62, H04M 11/06

(54) **Verfahren zur Inbetriebnahme einer unterschiedlichen Übertragungswegen zuzuordnenden Schnittstelle in einem programmgesteuerten Kommunikationssystem**
Method for putting into operation an interface allocatable to different transmission links in a program controlled communication system
Procédé pour la mise en service d'un interface allouable aux liaisons de transmission différentes dans un système à commande programmée

(30) Priorität: 16.03.1994 DE 4409023
(43) Veröffentlichungstag der Anmeldung: 18.10.1995
(73) Patentinhaber: SIEMENS AKTIENGESELLSCHAFT, 80333 München (DE)
(72) Erfinder: Dziennus, Norbert, Dipl.-Ing., D-44227 Dortmund (DE); Hoppe, Martin, Dipl.-Ing., D-59071 Hamm (DE); Böttger, Detlev, Dipl.-Ing., D-58239 Schwerte (DE); Spiel, Matthias, Dipl.-Ing., D-59439 Holzwickede (DE); Abel, Ulrich, Dipl.-Ing., D-45326 Essen (DE)

(56) Entgegenhaltungen:
- EP-A- 0 429 262
- EP-A- 0 503 487
- US-A- 4 683 531
- GROVER W D ET AL: "TURBO-LOOP: A RATE-ADAPTIVE DIGITAL SUBSCRIBER LOOP (RA-DSL) FOR ADVANCED ISDN ACCESS APPLICATIONS" GLOBECOM '89, 27.November 1989, DALLAS, US, Seiten 1945-1951, XP000144859
- VOLLMER A: "DIE SIEMENS-ISDN-CHIPFAMILIE" NACHRICHTENTECHNIK ELEKTRONIK, Bd. 40, Nr. 12, 1.Januar 1990, Seiten 463-466, XP000207633

## Beschreibung

Die Erfindung betrifft ein Verfahren zur Inbetriebnahme einer unterschiedlichen Übertragungswegen zuzuordnenden Schnittstelle in einem programmgesteuerten Kommunikationssystem, insbesondere in einem dienstintegrierenden digitalen Telekommunikationssystem mit einem die Vermittlung, Signalisierung und die Leistungsmerkmale des Kommunikationssystems steuernden bzw. koordinierenden Mikroprozessorsystem, das durch einen es repräsentierenden Mikroprozessor und durch u.a. anschluß- und gerätebezogene Informationen speichernden Speichereinheiten gebildet ist, und wobei Funktionskomponenten bzw. Schnittstellen des Kommunikationssystems an einen durch Adreß-Daten- und Steuerleitungen gebildetes lokales Bussystem angeschlossen sind.

Beispielsweise ist aus der europäischen Offenlegungsschrift EP 0 429 262 A ein Verfahren für eine Schnittstelleninitialisierung einer ISDN-Kommunikationseinrichtung für eine Datenübermittlung zwischen dieser ISDN-Kommunikationseinrichtung und einer weiteren Kommunikationseinrichtung bekannt, bei dem für die Datenübermittlung in der ISDN-Einrichtung zwei, durch die weitere Kommunikationseinrichtung bedingte unterschiedliche Übertragungsmodi auswählbar sind. Hierzu weist die ISDN-Kommunikationseinrichtung zwei unterschiedliche Kommunikationsschnittstellen - 'packet communication means' und 'circuit communication means' - auf, die für eine Datenübermittlung bereits vollständig konfiguriert sind. Eine Vereinbarung des zwischen der ISDN-Kommunikationseinrichtung und der weiteren Kommunikationseinrichtung zu verwendeten Übertragungsmodus erfolgt dabei durch Austausch von, durch die jeweilige Kommunikationseinrichtung initiierte positive und/oder negative Quittungsmeldungen. Anschließend erfolgt anhand der empfangenen Quittungsmeldung eine Auswahl der den ermittelnden Übertragungsmodus realisierenden, bereits konfigurierten Schnittstelle.

Des weiteren ist aus GROVER W.D. et. al.: "TURBO-LOOP: a rateadaptive digital subscriber loop (RA-DSL) for advanced ISDN access applications", GLOBECOM '89, 27. November 1989, Dallas, US, Seiten 1945 - 1951, XP000144859, ein Verfahren für eine Initialisierung einer Teilnehmerschnittstelle bekannt. Die Schnittstelle ist somit bereits für eine bestimmt Leitungsart - eine Teilnehmeranschlußleitung - vorinitialisiert. Die beschriebene Schnittstelleninitialisierung bezieht sich auf eine Vereinbarung über die maximale, mit einer weiteren Kommunikationseinrichtung realisierbaren Übertragungsbitrate, wobei der Initialisierungsprozeß in zwei Unterprozesse gegliedert ist. In einem ersten Unterprozeß wird anhand der angeschlossenen Leitung die maximale durch die Leitung realisierbare Übertragungsbitrate ermittelt. In dem zweiten Unterprozeß wird beginnend mit der ermittelten maximalen Übertragungsbitrate ein Verbindungsversuch mit der weiteren Kommunikationseinrichtung initiiert. Ist dieser nicht erfolgreich, wird die Übertragungsbitrate schrittweise reduziert und der Verbindungsversuch erneut gestartet. Dieser zweite Unterprozeß wird solange wiederholt, bis an der Teilnehmerschnittstelle eine Quittungsmeldung der weiteren Kommunikationseinrichtung empfangen wird.

Das Konzept eines ISDN-Telekommunikationssystems sieht vor, dem Teilnehmer den Zugang zu einer Vielzahl von Diensten der Sprach-Bild-, Text- und Datenkommunikation zu ermöglichen. Zu diesem Zweck wird dem Teilnehmer ein ISDN-Basisanschluß zur Verfügung gestellt, der in beiden Übertragungsrichtungen zwei Nachrichtenkanäle (B-Kanäle) sowie einen Signalisierungskanal (D-Kanal) umfaßt. Diese bei CCITT I.430 standardisierte Schnittstelle wird als S_{O}-Schnittstelle bezeichnet. Eine solche S_{O}-Schnittstelle ist ein Beispiel für eine Schnittstelle, die unterschiedlichen Übertragungswegen zugeordnet werden kann. Im D-Kanal werden u.a. Signalisierungsinformationen zwischen Endgeräten und Vermittlungsstelle ausgetauscht. Die Regeln für diesen Austausch sind im sogenannten D-Kanal-Protokoll festgeschrieben. Für die Signalisierungsprozeduren im D-Kanal kommen die unteren drei Schichten des sogenannten Schichtenmodells für offene Kommunikation (OSI-Modell) zur Anwendung. Bei diesem Modell für die Protokollarchitektur wird die Kommunikation in aufgabenbezogene Schichten gegliedert. In der Schicht 1 wird neben den elektrischen und physikalischen Eigenschaften der S_{O}-Schnittstelle ein Mehrfachzugriffverfahren definiert, das die gemeinsame Benutzung des D-Kanals durch mehrere Endgeräte ermöglicht. Es ist die Aufgabe der Schicht 2, die gesicherte Übertragung von Nachrichten der Schicht 3 sicherzustellen. Dazu muß das Protokoll sowohl den Erfordernissen des Übertragungsmediums als auch denen der übergeordneten Signalisierungsabläufe gerecht werden. Eine ISDN-Basisschnittstelle kann im Kommunikationssystem- oder im Kommunikationsendgerätemodus betrieben werden. Die S_{O}-Schnittstelle zur Vermittlungsstelle ist jedoch im Detail nicht mit der S_{O}-Endgeräteschnittstelle identisch, da sie z.B. den Busbetrieb und auch die Speisung nicht umfaßt. S_{O}-Endgeräte können in unterschiedlichen Anschlußkonfigurationen angeschaltet werden. Neben einem Punkt-zu-Punkt-Betrieb für den Anschluß eines einzelnen ISDN-Endgerätes ist ein Punkt-zu-Mehrpunkt-Betrieb möglich. Bei der vieradrigen S_{O}-Bus-Installation können bis zu maximal acht S_{O}-Endgeräte frei am Bus verteilt sein.

Es kann, wie bereits erwähnt, die ISDN-Basisanschlußschnittstelle S_{O}.sowohl für den Anschluß von ISDN-Kommunikationsendgeräten mit einer S_{O}-Schnittstelle als auch für den ISDN-Anschluß eines Kommunikationsnetzes, insbesondere eines öffentlichen Kommunikationsnetzes, vorgesehen sein. Es wird dadurch eine hohe Flexibilität hinsichtlich des Einsatzes der ISDN-Basisanschlußschnittstellen erreicht.

Zur Festlegung der jeweiligen Betriebsart der S_{O}-Schnittstelle müssen über ein entsprechendes Betriebsterminal oder über ein hierzu berechtigt geschaltetes Endgerät betriebstechnische Eingaben im Zusammenhang mit einer speziellen Prozedur durch eine entsprechende Bedienperson erfolgen. Bei einer Verbindung zum öffentlichen Kommunikationsnetz ist die amtsseitige S_{O}-Schnittstelle gezielt als Amtsanschluß zu konfigurieren. Bei der Verbindung der S_{O}-Schnittstelle zu S_{O}-Endeinrichtungen, wie z.B. S_{O}-Fernsprecheinrichtungen, Faxgeräten und Personalcomputer ist sie als S_{O}-Bus durch die Eingabe von bestimmten Informationen, die durch die Betriebstechnik entsprechend ausgewertet werden, festzulegen.

Es ist die Aufgabe der Erfindung, die Konfigurierung einer in unterschiedlicher Weise einsetzbaren Schnittstellen von Kommunikationssystemen zu vereinfachen. Diese Aufgabe wird durch die Merkmale des Anspruches 1 gelöst. Bezogen auf die unterschiedlichen Anschlußarten und damit auch zugrundeliegende Betriebsarten wird bei gesteckter Leitung und damit wirksam vorhandener Gegenseite eine vollständig automatische Erkennung und Inbetriebnahme des betreffenden Anschlusses vorgenommen. Manuell erfolgende Eingaben sind nicht mehr erforderlich. Der Anschluß wird als eine der möglichen Anschlußarten initialisiert und die Inbetriebnahme gestartet. Ist diese Inbetriebnahme nicht innerhalb einer festgelegten Zeit erfolgt, so wird der Anschluß mit der nächsten Anschlußart initialisiert und die Inbetriebnahme erneut gestartet. Ist die Inbetriebnahme erfolgreich, so wird der betreffende Anschluß durch die von der zentralen Steuerung abgesetzten Meldungen an die vermittlungstechnischen und betriebstechnischen Prozesse bzw. Programmodule in der entsprechenden Anschlußart konfiguriert. Nachdem beim Hochlauf des Kommunikationssystems der Anstoß für die Inbetriebnahme der Schnittstelle durch den sicherheits- und betriebstechnischen Prozeß erfolgte, wird in einer durch die Protokollabsprachen vorgegebenen Weise ein Meldungsaustausch zwischen den eingangs genannten Funktionsschichten 1 bis 3 vorgenommen. Dieser Meldungsaustausch unterscheidet sich in Abhängigkeit von der gewählten Betriebsart für die jeweilige Schnittstelle. Vor jedem Inbetriebnahmeversuch ist die Schnittstelle auf einen bestimmten Modus voreingestellt. Handelt es sich bei der Schnittstelle um die S_{O}-Schnittstelle eines ISDN-Basisanschlusses, so muß sie beispielsweise als amtsseitige Schnittstelle in der Lage sein, Taktinformationen, die über die Amtsleitung eintreffen, aufzunehmen und als teilnehmerseitige (S_{O}-Bus)-Schnittstelle fähig sein, Taktinformationen an die S_{O}-Endgeräte abzugeben und deren Quittungsinformationen zu bewerten.

Bei nicht erfolgreichen Inbetriebnahmeversuchen wird nach einer Weiterbildung der Erfindung nach einer festgelegten Zeit die Inbetriebnahme aller Anschlußarten erneut durchgeführt. Dies erfolgt in einer zyklischen Wiederholung. Während dieser festgelegten Wartezeit ist im Falle der ISDN-Basisschnittstelle der S_{O}-Anschluß in der wahrscheinlichsten Anschlußart initialisiert, damit in diesem Zustand auf einen Inbetriebnahmeversuch der Gegenseite reagiert werden kann.

Gemäß einer Weiterbildung der Erfindung wird nach einer Inbetriebnahme bei einem nachfolgenden Versuch zur automatischen Erkennung dieser Versuch mit der vorab als gültig erkannten und abgespeicherte Betriebsart erneut gestartet. Man geht also zunächst davon aus, daß die Schnittstelle weiterhin in der gleichen Weise betrieben wird.

Bei der vorangegangenen Schilderung der wesentlichen Aspekte des erfindungsgemäßen Verfahrens wurde beispielhaft als Schnittstelle eine ISDN-Basisschnittstelle S_{O}.vorausgesetzt. Neben einer solchen standardisierten Schnittstelle kann das erfindungsgemäße Verfahren in gleicher Weise auch bei anders gearteten Schnittstellen eingesetzt werden, die in sich voneinander unterscheidenden Anschlußarten einsetzbar sind. Ist eine solche S_{O}-Schnittstelle als integrierter Telekommunikationsschaltkreis ausgebildet, so ist auch unter Berücksichtigung des Einsatzes von anwenderspezifizierbaren integrierten Schaltkreisen eine besonders wirtschaftliche Realisierung insbesondere eines kleinen digitalen ISDN-Kommunikationssystems möglich. Die S_{O}-Schnittstelle kann Teil einer Basisanschlußeinheit sein, die mit dem lokalen Bussystem verbunden ist und die für jede der möglichen Betriebsarten eine individuelle Ansteuerleitung zur Einstellung des jeweiligen Betriebsmodus aufweist.

Im folgenden wird das erfindungsgemäße Verfahren anhand einiger Ausführungsbeispiele näher erläutert.

Es zeigt
- Figur 1: das Blockschaltbild einer ISDN-Telekommunikationsanlage mit in unterschiedlichen Betriebsarten einzusetzenden ISDN-Basisanschlußeinheiten,
- Figur 2: die bei der Inbetriebnahme der Schnittstelle beteiligten Komponenten, und
- Figuren 3 bis 5: Meldungsablaufdiagramme zur Erkennung der ISDN-Schnittstellen.

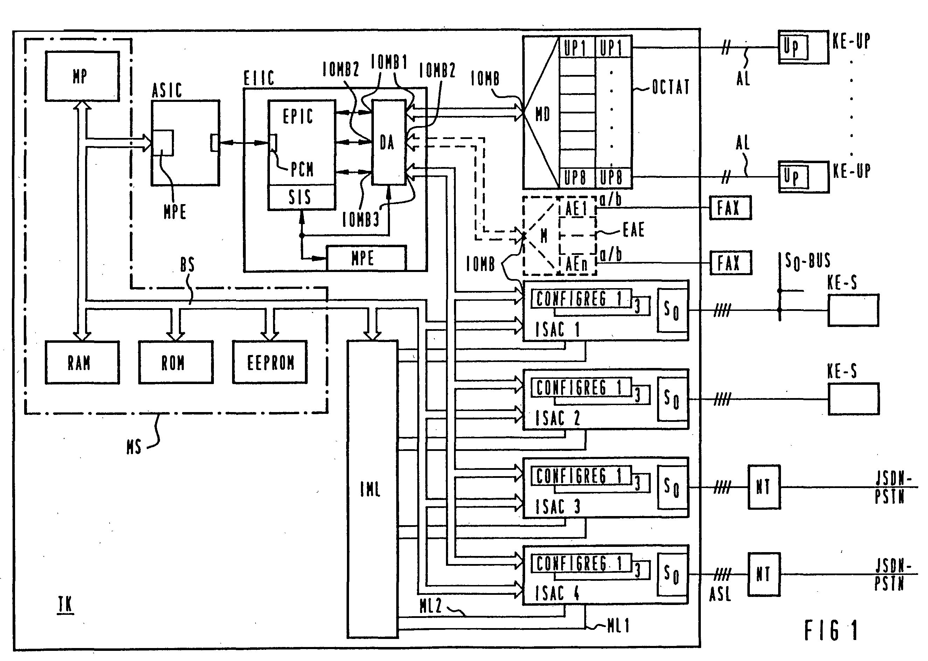

Das Blockschaltbild nach der Figur 1 zeigt ein ISDN-Telekommunikationssystem, das als sogenanntes kleines Kommunikationssystem nur eine geringe Anzahl von anschließbaren Kommunikationsendgeräten bzw. von Anschlüssen an ein öffentliches Netz aufweist. Das Kommunikationssystem TK wird im wesentlichen durch ein Mikroprozessorsystem MS, eine Vermittlungseinheit ELIC, eine Übertragungseinheit OCTAT sowie von ISDN-Basisanschlußeinheiten ISAC gebildet. Weiterhin ist noch eine Ergänzungseinheit ASIC vorgesehen, die u.a. der Takterzeugung und der Ermittlung von Hör- bzw. Musiktönen an Kommunikationsendgeräte dienen und die außerdem eine Synchronisationseinrichtung enthält.

Die dargestellte Übertragungseinheit OCTAT enthält acht Übertragungsschaltungen UP1...UP8. Durch diese Übertragungsschaltungen ist eine nach dem Zeitgetrennt-Übertragungsverfahren wirkende Up-Schnittstelle Up1...Up8 realisiert. Jede dieser Schnittstellen Up1...Up8 ist für den Anschluß eines mit einer gleichartig realisierten Up-Schnittstelle ausgestatteten ISDN-Kommunikationsendgerätes KE-UP vorgesehen. Hierzu ist in jedem der ISDN-Kommunikationsendgeräte KE-UP eine gleichartig zu der in der Übertragungseinheit OCTAT realisierten Übertragungsschaltung UP angeordnet. An jede Übertragungseinheit OCTAT sind mit Hilfe zusätzlicher separater oder im Kommunikationsendgerät KE realisierter Einrichtungen in nicht dargestellter Weise weitere Kommunikationsendgeräte mit jeweils einem Nachrichtenkanal anschließbar. Eine solche Übertragungseinheit wäre dann beispielsweise mit sechzehn Kommunikationsendgeräten beschaltbar. Bei dieser Up-Schnittstelle umfaßt die bidirektionale Informationsübermittlung zwei Nachrichtenkanäle - die bei ISDN-Verbindungen mit B-Kanäle bezeichnet sind - sowie einen als D-Kanal bezeichneten Signalisierungskanal und zusätzliche Informationen für eine Rahmensynchronisation, für zusätzliche Dienstkanäle. Die Signalisierungsprozedur ist entsprechend der bei CCITT (Comiteé Consultatif International de Telegraphique et Telefonique) standardisierten Verfahren für ISDN-Netze (Integrated Services Digital Networks) realisiert. Die empfangenen bzw. die zu sendenden Nachrichten- und Signalisierungsinformationen werden mit Hilfe einer in der Übertragungseinheit OCTAT angeordneten Multiplex-/Demultiplexeinrichtung MD zu einem Informationsstram zusammengefaßt, wobei als steuernde Schnittstelle eine sogenannte ISDN-orientierte interne Systembusschnittstelle IOMB dient.

Die Systemschnittstelle IOMB ist an eine erste gleichartig realisierte interne, ISDN-orientierte Systembusschnittstelle IOMB1 der Peripheriesteuerung ELIC geschaltet. Diese Systembusschnittstelle ist in der Peripheriesteuerung ELIC von einer Signalisierungskanalsteuerung DA realisiert, mit deren Hilfe die Zuteilung bzw. das Sperren der Signalisierungskanäle bzw. D-Kanäle über die Anschlußleitung AL zu den ISDN-Kommunikationsendgeräten KE-UP bewirkt wird.

In der D-Kanalsteuerung DA ist für den optionalen Anschluß einer Erweiterungsanschlußeinheit EAE eine zur ersten Systembusschnittstelle gleichartige weitere Systembusschnittstelle IOMB2 realisiert. Diese Systembusschnittstelle ist mit der gleichfalls eine Systembusschnittstelle IOMB aufweisenden Erweiterungsanschlußeinheit EAE verbunden. In dieser Erweiterungseinheit sind Anschlußeinheiten AE1...AEn vorgesehen. Es können beispielsweise vier derartige Anschlußeinheiten vorhanden sein. In ihnen sind für den Anschluß von analogen -Kommunikationsendgeräten a/b-Schnittstellen realisiert. Diese Erweiterungsanschlußeinheit kann insbesondere für den Anschluß von analogen Faksimile-Endgeräten FAX vorgesehen sein. Mit Hilfe der vorhandenen Anschlußeinheiten AE1...AEn werden die bekannten analogen Signalisierungs- und Nachrichtenübertragungsverfahren realisiert. Die digitalisierten analogen Informationssignale werden mit Hilfe einer Multiplexeinrichtung M zusammengefaßt und an die Systembusschnittstelle IOMB geführt. Analog hierzu werden die von der Systembusschnittstelle IOMB übermittelten Nachrichten- bzw. Signalisierungsinformationen demultiplext und an die Anschlußeinheiten AE weitergeleitet. Die Erweiterungsanschlußeinheit EAE ist vorteilhaft durch integrierte Telekommunikationsschaltkreise (z.B. SICOFI) realisiert.

In der Signalisierungskanalsteuerung DA ist eine weitere ISDN-orientierte, interne Systembusschnittstelle IOMB3 realisiert. Diese zur ersten Systembusschnittstelle IOMB1 gleichartige Systembusschnittstelle ist im Ausführungsbeispiel parallel mit vier ISDN-Basisanschlußeinheiten ISAC1 bis ISAC4 verbunden. Jeder dieser Basisanschlußeinheiten ist mit einer Systembusschnittstelle IOMB ausgestattet. Über diese ISDN-Basisanschlußeinheiten ISAC erfolgt, wie später noch ausgeführt wird, eine Verbindung zu einer ISDN-Amtsleitung oder zu einem ISDN-Kommunikationsendgerät.

Die Systembusschnittstellen IOMB1...IOMB3 werden über die Signalisierungskanalsteuerung DA mit einer Vermittlungseinheit EPIC verbunden. In dieser Vermittlungseinheit ist eine Koppelfeldeinrichtung, z.B. in Form eines zeitschlitzgesteuerten Koppelfeldes implementiert. Mit Hilfe dieses Koppelfeldes sind Nachrichtenkanäle mit jeweils 64 KB/s vermittelbar. Die Vermittlungseinheit EPIC weist weiterhin einen bidirektional ausgestalteten Anschluß PCM auf, der mit einem gleichartig ausgebildeten Anschluß der Ergänzungseinheit ASIC verbunden ist. In der Vermittlungseinheit ist eine Signalisierungssteuerung SIS vorgesehen, mit deren Hilfe die in den Signalisierungskanälen bzw. D-Kanälen enthaltenen bzw. einzufügenden Signalisierungsinformationen gelesen bzw. eingefügt und an eine Mikroprozessoreinheit MPE geleitet bzw. von dieser übernommen werden. Für einen Informationsaustausch mit dem Mikroprozessorsystem MS ist in der Ergänzungseinheit ASI gleichfalls eine Mikroprozessoreinheit MPE implementiert.

Das Mikroprozessorsystem MS ist durch einen Mikroprozessor MP und durch diesem zugeordnete Speichereinheiten gebildet. Im Lesespeicher ROM sind insbesondere die die vermittlungstechnischen Funktionen und die Komponenten des Kommunikationssystems TK koordinierenden Programme gespeichert. Im Schreib-Lese-Speicher RAM ist der Arbeitsspeicher des Mikroprozessors MP und ein Speicherbereich für verbindungsindividuelle Speicherung von Verbindungsinformationen vorgesehen. Der Arbeitsspeicher dient u.a. der Aufnahme von temporären Daten zur Programmablaufsteuerung. Der Speicher EEPROM verliert bei einem Spannungsausfall seine in ihm gespeicherten Daten nicht und er repräsentiert den sogenannten Kundendatenspeicher.

Sowohl die interne Verbindung zwischen dem Mikroprozessor MP, dem Lesespeicher ROM, dem Schreib-Lese-Speicher RAM als auch die Verbindung mit den Mikroprozessoreinheiten MPE der Ergänzungseinheit ASI und der Peripheriesteuerung ELIC und der ISDN-Basisanschlußeinheiten ISAC1...ISAC4 wird mit Hilfe eines lokalen Bussystems BS bewirkt. Dieses lokale Bussystem BS wird in nicht dargestellter Weise durch die Daten-, Adreß- und Steuerleitungen gebildet.

Es sind, wie bereits erläutert, Basisanschlußeinheiten ISAC vorhanden, in denen jeweils eine in den CCITT-Empfehlungen standardisierte S_{O}-Schnittstelle S_{O} für ISDN-Basisanschlüsse realisiert ist. Diese Schnittstelle kann durch ein entsprechendes Ansteuersignal auf einer der Mode Select-Leitungen ML1 bzw. ML2 in einem Kommunikationssystem- bzw. ISDN-Kommunikationsnetzmodus gesteuert werden. Die entsprechenden Leitungen ML1 bzw. ML2 sind jeweils mit einem Baustein IML (ISAC-Mode-Latch) verbunden. Dieser Baustein selbst hat Zugang auf den lokalen Bus BS. Auf diesen Ansteuerleitungen ML1 bzw. ML2 können in Abhängigkeit von den durch die Steuerung übermittelten Informationen bestimmte Potentiale angelegt werden, durch die eine hardwaremäßige Umschaltung der Basisanschlußeinheit ISAC vorgenommen werden kann. Das Mikroprozessorsystem MS schreibt in den Baustein IML ein entsprechendes Bitmuster ein, so daß die Ansteuerleitungen auf den dem gewünschten Modus entsprechenden Pegel gesetzt werden. Die ISDN-Basisanschlußeinheit ISAC kann so konfiguriert werden, daß die betreffende S_{O}-Schnittstelle entweder an ein eine S_{O}-Schnittstelle aufweisendes Kommunikationsendgerät als auch an einen ISDN-Anschluß eines öffentlichen Kommunikationsnetzes ISDN-PSTN (Public Switch Telephone Network) anschließbar ist. Je nach Betriebsmodus, d.h. nach Anschlußart der Basisschnittstelle S_{O} werden durch das Mikroprozessorsystem über den lokalen Bus BS Konfigurierungsregister im jeweiligen ISAC-Baustein eingestellt. In jedem Baustein sind mehrere dieser Konfigurierungsregister vorhanden. Beispielsweise sind dies für die Basisanschlußeinheit ISAC4 die Register KONFIGREG1...KONFIGREG3. Diese Einheit ist im Speicherlayout des Kommunikationssystems integriert und die Steuerung greift über die entsprechenden Adressen auf diese Konfigurierungsregister zu und schreibt die entsprechenden Werte ein. Im Ausführungsbeispiel sei angenommen, daß zwei ISDN-Anschlüsse eines öffentlichen Kommunikationsnetzes ISDN-PSTN an jeweils eine S_{O}-Schnittstelle des Telekommunikationssystems TK angeschlossen ist. Die beiden anderen S_{O}-Schnittstellen sind im Ausführungsbeispiel an ISDN-Kommunikationsendgeräte geführt. Eine andere Anschlußvariante ist, wie bereits erwähnt, durch einfache Modusumsteuerung der ISDN-Basisanschlußeinheiten ISAC1...ISAC4 in Abhängigkeit von der Anzahl der gewünschten ISDN-Anschlüsse eines öffentlichen Kommunikationsnetzes ISDN-PSTN oder einer gewünschten Anzahl von Kommunikationsendgeräten, symbolisiert durch ein Endgerät KE-S jederzeit möglich. In dem Telekommunikationssystem TK dient die endgeräteseitige S_{O}-Schnittstelle zur Anschaltung einer internen S_{O}-Bus-Endgeräteleitung. An einen derartigen S_{O}-Bus können, wie bereits erwähnt, bis zu acht ISDN-Kommunikationsendgeräte angeschlossen werden. Über eine solche vieradrige S_{O}-Bus-Installation ist somit ein Punkt-zu-Mehrpunkt-Betrieb möglich. Bei der Anschaltung mehrerer Endgeräte am S_{O}-Bus sind Zusatzinformationen, beispielsweise eine Diensterkennungsauswahl des gewünschten Kommunikationsendgerätes zu übermitteln.

Beim Anschluß einer ISDN-Leitung zum öffentlichen Netz gliedert sich die Übertragungsstrecke in einen sogenannten U-Übertragungsteil von der Vermittlung zum Netzabschluß NT und in ein S-Übertragungsteil vom Netzabschlußteil NT über die Basiseinheiten zu den jeweiligen Endgeräten des Nebenstellen-Kommunikationssystems. Dabei hat dann die U-Übertragungsstrecke die Aufgabe, die Entfernung zu überbrücken und das S-Übertragungsteil die dem ISDN zugrundeliegende Idee des Betriebes mehrerer Endgeräte an einem Basisanschluß zu verwirklichen. Die Leitung zum öffentlichen Netz kann beispielsweise eine sogenannte U_{KO}-Leitung darstellen. Dieses Übertragungsverfahren stellt ein Zweidraht-Duplexübertragungsverfahren mit Echokompensation dar. Im Netzabschluß NT wird dann die Schnittstelle U_{KO} auf die Schnittstelle S_{O} umgesetzt.

Es ist nun vorgesehen, daß die Betriebsart bzw. die Anschlußart einer jeden S_{O}-Schnittstelle der Basisanschlußeinheit ISAC ohne die Notwendigkeit von betriebstechnischen Eingaben durch eine Bedienperson völlig selbsttätig erkannt wird und die Inbetriebnahme des ISDN-Anschlusses als S_{O}-Amtsanschluß oder als S_{O}-Busanschluß erfolgt.

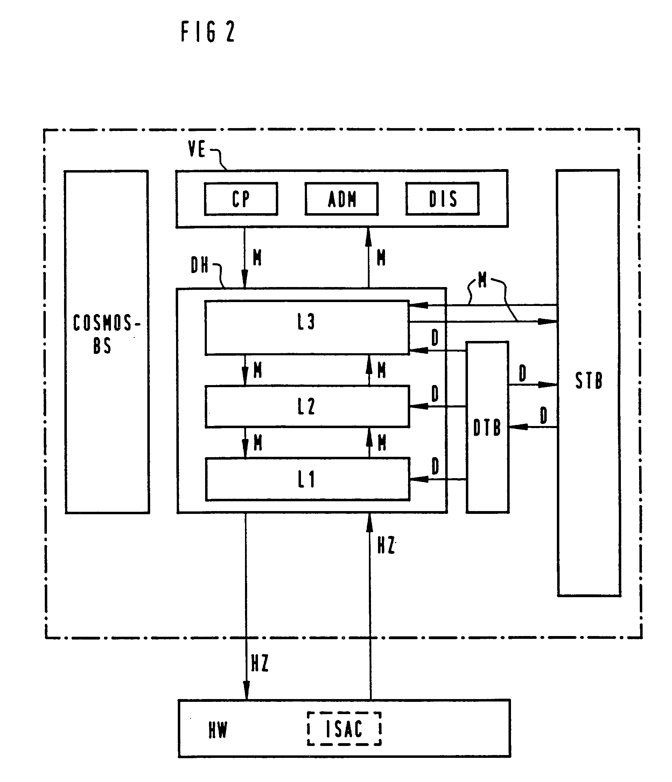

Für diese automatische Erkennung der ISDN-Schnittstelle sind bestimmte Algorithmen implementiert. Beim Hochlauf des Systems wird automatisch die richtige Konfiguration erkannt. Einmal erkannte Konfigurationen werden resetfest abgespeichert. In der Figur 2 sind die bei der automatischen Erkennung und Inbetriebnahme beteiligten Komponenten dargestellt. Die beteiligten Komponenten sind die Komponente Datenbasis DTB, die sicherheits- und betriebstechnische Komponente STB und die endgeräteorientierte Komponente DH (Device Handler). Jedes der Programmodule DH bietet eine systemeinheitliche Schnittstelle zur Vermittlungstechnikstrukturebene. Der Informationsaustausch zwischen der Leitungstechnik-Strukturebene DH und der Vermittlungstechnik-Strukturebene erfolgt mittels definierter Meldungen. Die Meldungsendstellen zwischen den einzelnen Komponenten sind durch einen mit M bezeichneten Pfeil angedeutet. Die Datenschnittstellen sind durch einen mit D bezeichneten Pfeil angedeutet, während die Hardwarezugriffsmöglichkeit durch den Pfeil HZ charakterisiert wird. In der Vermittlungstechnikstrukturebene VE sind die Komponenten CP (Call Processing) als Vermittlungsprozedur-Programmodul, das auch die Leistungsmerkmalsteuerung beinhaltet, das für Verwaltungsaufgaben zuständige Modul ADM und das für die Displaysteuerung vorhandene Modul DIS angedeutet. Diese genannten Komponenten der Ebene VE sind an der Erkennung und an der Inbetriebnahme einer S_{O}-Schnittstelle nicht unmittelbar beteiligt. Es wird ihnen jedoch nach erfolgter Inbetriebnahme oder nach einem erfolglosen Inbetriebnahmeversuch eine entsprechende Meldung übermittelt, die eine Quittungsinformation auslöst.

Die Aufgaben des Vermittlungsprozedur-Programmodus CP umfassen beispielsweise die für die Steuerung des Verbindungsaufbaus und des Verbindungsabbaus notwendigen Teilprozesse der gesamten Vermittlungsprozedur. So werden z.B. Berechtigungen geprüft und die Wahlbewertungsprozeduren durchgeführt. Es erfolgt auch eine Signalisierung von vermittlungstechnischen Zuständen zwischen Kommunikationsendgeräten und es ist ein Aktivieren und ein Deaktivieren von Vermittlungstechnik-Leistungsmerkmalen aus den unterschiedlichen vermittlungstechnischen Zuständen heraus durchführbar.

Die Komponenten stehen unter dem Einfluß des schematisch angedeuteten Betriebssystems COSMOS-BS, das die anfallenden Aufgaben koordiniert. In Abhängigkeit von eingetroffenen oder innerhalb der Systemsteuerung intern gebildeten Anreizen werden dem Mikroprozessorsystem MS Verarbeitungsvorschriften zugewiesen. Diese beinhalten auch eine Reaktion auf die verschiedenen Anreize. Bezogen auf die Inbetriebnahme einer Schnittstelle ist das Betriebssystem BS in der Lage, Echtzeitabläufe zu steuern. Softwarepakete werden als prioritätsorientierte Prozesse meldungsgesteuert zum Ablauf gebracht.

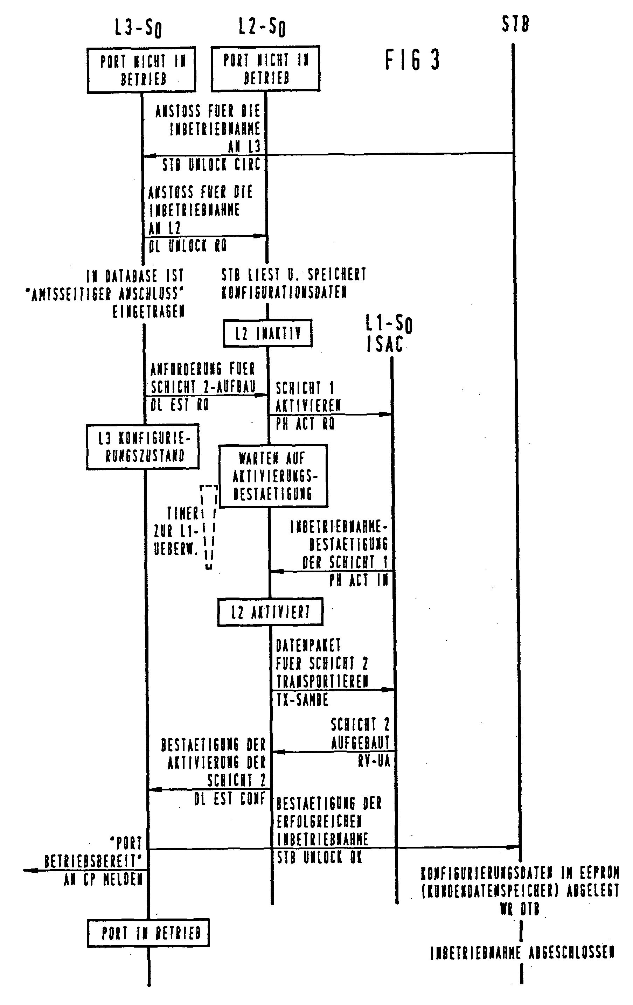

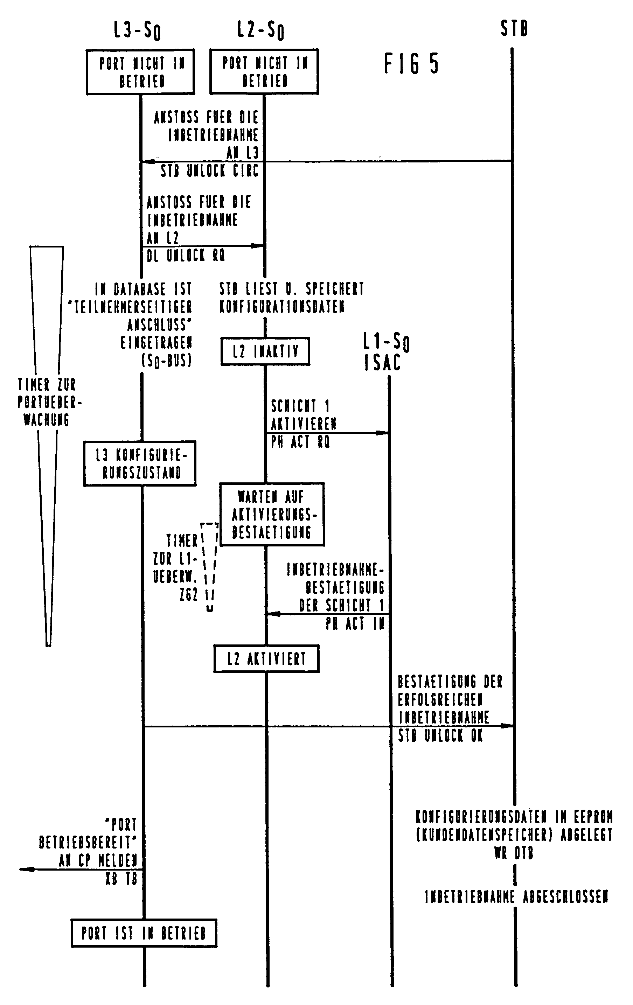

In der Figur 2 ist mit HW die beispielsweise entsprechend der Figur 1 vorhandene Hardware angedeutet. Aus dem endgerätenahen Softwarekomplex DH erfolgt beispielsweise ein Zugriff auf die Basisanschlußeinheit ISAC. Mit den Teilkomponenten L1 bis L3 in der Komponente DH (Device Handler) sind die ersten drei Schichten L1 bis L3 (Layer1 bis Layer3) des Schichtenmodells kenntlich gemacht. Diese Schichten sind grundsätzlich unabhängige Prozesse, die über Meldungen miteinander kommunizieren. Jede Schicht hat dabei eine ihr fest zugeordnete Aufgabe. Der Schicht 1 als physikalische Schicht L1 (Physical Layer) ist die Aufgabe der Bitübertragung zugeordnet. Ist diese Schicht 1 aktiv und synchron, dann wird versucht, auf der höheren Schicht 2 (Date Link Layer) einen definierten Pulsrahmen in beiden Richtungen zu übertragen. Ist diese Datensicherungsschicht aufgebaut, dann wird die Fähigkeit der Schicht 1 benutzt, um Datenpakete, d.h. Meldungen, zu senden. Über diese Meldungen wird festgestellt, ob eine gesicherte Datenübertragung vorgenommen werden kann. Ist dies möglich, so wird die auf der Schicht 2 (L2) aufliegende Schicht 3 (L3) dazu benutzt, aufgrund der gesicherten Datenverbindung eine Vermittlungsfunktion auszuführen. In den Meldungsflußdiagrammen nach den Figuren 3 bis 5, in denen die Vorgänge bei der automatischen Inbetriebnahme der entweder als S_{O}-Amtsschnittstelle oder als Schnittstelle für den S_{O}-Bus als entsprechende Meldungen bzw. als Zustände dargestellt sind, sind mit L1 bis L3 die genannten drei Schichten des Schichtenmodells definiert. Bei diesen erfindungsgemäßen Meldungsabläufen ist für die Schicht 1 durch den Hinweis auf die ISDN-Basiseinheit ISAC ausgedrückt, daß die für den Aufbau der Schicht 1 festgelegten Bit-Muster nach einem entsprechenden Kommando von der zentralen Steuerung durch diese Einheit selbst ausgesendet werden. Ein derartiges Kommando beinhaltet die entsprechende Schaltinformation auf den Mode-Select-Leitungen ML1 bzw. ML2 und die über den Bus erfolgende Einstellung der Konfigurierungsregister CONFIGREG.

Dies erfolgt mit einem auf den teilnehmerseitigen Anschluß bzw. auf den Amtsanschluß der S_{O}-Schnittstelle abgestimmten jeweiligen Standarddatensatz. Anschließend versucht der Baustein Kommunikation mit der entsprechenden Gegenseite aufzunehmen. Gelingt es nicht, so wird dies nachfolgend mit der jeweils anderen Schnittstelleninitialisierung erneut versucht. Dieses automatische Erkennen und die nachfolgende Inbetriebnahme bei erkannter Betriebsart einer gesteckten Leitung wird erstmalig mit dem Hochlauf des Kommunikationssystems durchgeführt. Da eine Änderung der Anschlußvarianten bzw. das Stecken einer die Gegenseite definierenden Leitung jederzeit möglich sind, wird eine zyklische Wiederholung des Erkennungsablaufes vorgenommen.

Es wird also beispielsweise nach dem Hochlauf des Kommunikationssystems ohne weitere Eingaben bzw. manuelle Zugriffe ein S_{O}-Anschluß in Betrieb genommen. Hierzu wird beispielsweise der S_{O}-Port, der der Basiseinheit ISAC3 zugehörig ist, zunächst versuchsweise als Amtsanschluß behandelt. Das bedeutet, daß die internen Register entsprechend eingestellt werden und daß der Amts-Betriebsmodus durch einen entsprechenden Befehl der Mode-Select-Leitung ML1 bzw. ML2 vorgegeben wird. In der Figur 3 ist das Meldungsflußdiagramm dargestellt. Es veranschaulicht, wie zwischen den einzelnen beteiligten Prozessen Meldungen wechselseitig übermittelt werden und anhand welcher Kriterien entschieden wird, daß der Port in der richtigen Betriebsart in Betrieb geht. In den rechteckig umrandeten Bereichen des Diagrammes sind jeweils die Zustände definiert, in denen sich die einzelnen Schichten, d.h. Layer1 bis Layer3 befinden. Ausgangssituation für die Schicht L2 und L3 ist die Zustandsinformation, daß sich der Port nicht in Betrieb befindet. Durch den betriebstechnischen Prozeß STB wird, initiiert durch die zentrale Steuerung eine Meldung an den die Schicht L3 verifizierenden Prozeß für den Anstoß zur Inbetriebnahme übermittelt (STB UNLOCK CIRC). Daraufhin wird eine Anstoßinformation für die Inbetriebnahme an L2 gesendet (DL UNLOCK). Der betreffende Port soll zunächst versuchsweise als amtsseitiger Anschluß, d.h. als Amtsschnittstelle in Betrieb genommen werden. Durch den sicherheitstechnischen und betriebstechnischen Prozeß STB werden die entsprechenden Konfigurationsdaten gelesen und gespeichert. Diese Konfigurationsdaten werden aus der Datenbasis DTB (Figur 2) über die entsprechenden Programmzugriffe gelesen. Die Schicht L2 wechselt in den inaktiven Zustand. Das bedeutet, die Schicht ist zwar noch deaktiviert aber in einer Bereitstellung zur Aktivierung. Aus der Schicht L3 kommt die Aufforderung für die Schicht 2 zum Aufbau (Meldung DL EST RQ; Data Link Establish Request). Daraufhin wird die Meldung zur Aktivierung der XXX Schicht 1 veranlaßt (PH ACT RQ; Physical Activation Request). Die Schicht 2 befindet sich in einem Zustand, in dem sie auf die Aktivierungsbestätigung wartet. Mit der Meldung PH ACT IN (Physical Activation Indication) erfolgt die Inbetriebnahmebestätigung von der Schicht L1 zur Schicht L2. Diese wechselt in den Aktivierungszustand. Gleichzeitig wird mit dieser Meldung PH ACT IN ein Zeitglied ZG zur L1-Überwachung, das im Zustand "Warten auf Aktivierungsbestätigung" angelassen wurde, angehalten. Somit ergeben sich dadurch keine weiteren Auswirkungen. Der Ablauf des Zeitglieds hätte nur bei einem erfolglosen Inbetriebnahmeversuch eine Bedeutung. Dem Physical Layer wird durch die Schicht 2 der Auftrag gegeben, ein Datenpaket für die Schicht 2 zu transportieren, das den Inhalt TX-SAMBE hat. Handelt es sich bei der in Betrieb zu nehmenden S_{O}-Schnittstelle tatsächlich um eine Amtsschnittstelle, so wird diese genannte Meldung über die zweiadrige Amtsleitung ASL zum öffentlichen Amt ISDN-PSTN übertragen. Über die aufgebaute physikalische Verbindung wird vom öffentlichen Amt eine Meldung RV-UA zurückgesendet, die den Aufbau der Schicht 2 bestätigt.

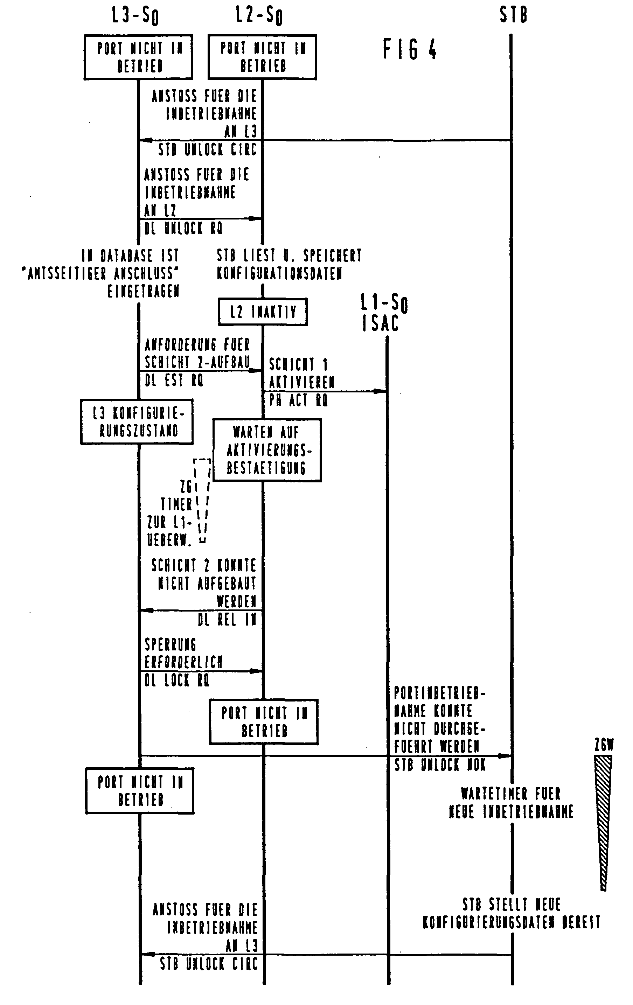

Mit der Meldung DL EST CONF (Data Link Establish Configuration) wird die Bestätigung über die Aktivierung der Schicht 2 zu der Schicht L3 übertragen. Dies ist die Meldung, die im Falle einer erfolgreichen Erkennung der Schnittstelle im L3-Konfigurierungszustand erwartet wird. Mit der Meldung STB UNLOCK OK wird dem sicherheits- und betriebstechnischen Prozeß STB die Bestätigung über die erfolgreiche Inbetriebnahme übermittelt. Durch den Prozeß L3 wird mit der Meldung XBTB an die vermittlungstechnische Komponente CP gemeldet, daß der aktuell überprüfte Port betriebsbereit ist. Die Schicht L3 wechselt in den Zustand "Port ist in Betrieb". Durch den sicherheits- und betriebstechnischen Prozeß werden die ursprünglich prophylaktisch vorgegebenen Konfigurierungsdaten sowohl in der Speichereinheit RAM als auch im nichtflüchtigen Parameterspeicher EEPROM, d.h. also im Kundendatenspeicher, abgelegt. In dem gemäß der Figur 3 geschilderten Meldungsablauf handelt es sich also um eine erfolgreiche Portinbetriebnahme, da der zunächst als Amtsschnittstelle angenommene Port tatsächlich eine solche Amtsschnittstelle darstellt. Würde man davon ausgehen, daß beispielsweise die S_{O}-Schnittstelle des Bausteins ISAC3 keine solche Amtsschnittstelle darstellt sondern daß daran ein sogenannter S_{O}-Bus angeschlossen ist - daß es sich also um eine teilnehmerseitige Schnittstelle handelt - so muß ein Inbetriebnahmeversuch als Amtsschnittstelle scheitern. Es würde sich also eine erfolglose Portinbetriebnahme ergeben, wenn zunächst prophylaktisch in die Konfigurierungsregister CONFIGREG dieses Bausteins ISAC3 die einer Amtsschnittstelle zugeordneten Konfigurierungsdaten eingegeben worden wären. In der Figur 4 ist der Meldungsablauf bei einer solchen erfolglosen Portinbetriebnahme dargestellt. Bis zum Konfigurierungszustand der Schicht 3 und dem Zustand "Warten auf Aktivierungsbestätigung" der Schicht 2 stimmen die Zustände und die Meldungen mit denen der Figur 3 überein. Nach der Meldung PH ACT RQ (Physical Activation Request) wird in gleicher Weise wie bei der Darstellung nach der Figur 3 ein Zeitglied aktiviert. Während bei den Abläufen nach der Figur 3 dieses Zeitglied durch die Inbetriebnahmebestätigung der Schicht 1 zurückgestellt wird und somit nicht ablaufen kann, wird bei der erfolglosen Inbetriebnahme keine Unterbrechung des ablaufenden Zeitgliedes vorgenommen. Da es sich voraussetzungsgemäß bei der S_{O}-Schnittstelle nicht um eine amtsseitige Schnittstelle handeln soll, erfolgt keine Inbetriebnahmebestätigung der Schicht 1. Das Überwachungszeitglied läuft also unbeeinflußt ab. Mit seinem Ablauf wird auf der Schicht 2 der Schicht L3 die Meldung DL REL IN (Data Link Release Indication) übermittelt. Diese Meldung beinhaltet die Aussage, daß die Schicht 2 nicht aufgebaut werden konnte. Aus der Schicht 3 wird die Meldung DL LOCK RQ übermittelt, die beinhaltet, daß der Port gesperrt ist, also entsprechend dem Ausgangszustand nicht in Betrieb ist. Zum sicherheits- und betriebstechnischen Prozeß wird mit der Meldung STB UNLOCK NOK die Information übermittelt, daß eine Inbetriebnahme nicht durchgeführt werden konnte. Die Schicht 3 befindet sich im Zustand "Port nicht in Betrieb".

Nach einer solchen erfolglosen Portinbetriebnahme wird ein Zeitglied ZGW aktiviert, das die Wartezeit bis zu einem neuen Inbetriebnahmeversuch definiert. Diese Zeit kann beispielsweise 30 Sekunden betragen.

Es wird also dann anschließend versucht, die betreffende S_{O}-Schnittstelle als teilnehmerseitige Schnittstelle (Network Side) in Betrieb zu nehmen. Hierzu werden durch die sicherheits- und betriebstechnischen Prozesse STB die hierzu notwendigen Konfigurierungsdaten bereitgestellt. Es werden also die Konfigurierungsregister in dem als Beispiel betrachteten Baustein ISAC3 neu eingestellt und er wird über die Mode Select-Leitungen ML1, ML2 in den teilnehmerseitigen Modus gebracht. Nach dem Ablauf des genannten Zeitgliedes ZGW erfolgt erneut ein Start für die Inbetriebnahme. Der Anstoß hierzu wird wie beim vorherigen Ausgangszustand an die Schicht 3 übermittelt.

Da es sich bei dem Anschluß um einen teilnehmerseitigen Anschluß, d.h. um den Anschluß eines S_{O}-Busses handeln soll, wird sich eine erfolgreiche Portinbetriebnahme bei der erfindungsgemäßen automatischen Erkennung ergeben.

Setzt man voraus, daß an die S_{O}-Schnittstelle der S_{O}-Bus angeschlossen ist und es sich somit um eine endgeräteseitige Schnittstelle handelt, so ist diese Schnittstelle in dem zugeordneten Modus befähigt, Takte an die Endgeräte abzugeben und deren Quittungsinformationen auszuwerten. Ausgehend von dem Zustand "Port nicht in Betrieb" erfolgt aus dem sicherheits- und betriebstechnischen Prozeß STB wiederum, wie bereits in den Figuren 3 und 4 geschildert, der Anstoß für die Inbetriebnahme und aus der Schicht 3 die Meldung, daß die Inbetriebnahme für die Schicht 2 anzustoßen ist. In der Datenbasis ist der betreffende Anschluß entsprechend seiner neuen Konfigurierungsart als teilnehmerseitiger Anschluß eingetragen. Die Schicht L2 befindet sich im Zustand inaktiv. Nach dem Anstoß für die Inbetriebnahme an die Schicht 2 wird ein Zeitglied ZG1 im Ausführungsbeispiel zur Portüberwachung aktiviert. Wenn dieser Timer ZG1 abläuft, ohne daß eine Meldungsindikation von der Schicht 2 an die Schicht 3 gelangte, so wird dies dann als Indiz für eine erfolgreiche Portinbetriebnahme gewertet. Nachdem die Schicht L2 in den inaktiven Zustand gewechselt ist, erfolgt mit der Meldung PH ACT RQ (Physical Activation Request) die Anforderung zur Aktivierung der Schicht 1. Die Schicht 2 geht in den Zustand "Warten auf Aktivierungsbestätigung". Die Schicht 3 befindet sich im Konfigurierungszustand. Nach der Anforderung zur Aktivierung der Schicht 1 wird ein weiteres Zeitglied ZG2 aktiviert. Erfolgt die Inbetriebnahmebestätigung der Schicht 1 durch die Meldung PH ACT IN (Physical Activation Indication), so wird der Ablauf dieses Zeitgliedes gestoppt. Bei einer erfolglosen Portinbetriebnahme für den S_{O}-Bus würde die Inbetriebnahmebestätigung ausbleiben und das Zeitglied ZG2ablaufen. Dies wäre dann das Kriterium dafür, daß die Portinbetriebnahme in dem als Ausgangspunkt für die Überprüfung vorgenommenen Modus nicht möglich ist. Im vorliegenden Fall soll es sich jedoch um eine erfolgreiche Portinbetriebnahme eines Teilnehmerinterfaces handeln, so daß nach der Inbetriebnahmebestätigung der Schicht 1 die Schicht 2 in den Zustand "aktiviert" wechselt. Mit der Meldung STB UNLOCK OK folgt aus der Schicht 3 die Bestätigung der erfolgreichen Inbetriebnahme an den sicherheitsund betriebstechnischen Prozeß STB. Bei einer solchen teilnehmerseitigen erfolgreichen Inbetriebnahme werden dann die entsprechenden Konfigurierungsdaten in den nichtflüchtigen Kundendatenspeicher EEPROM abgelegt. Dieser Schreibzugriff ist durch wr dtb (Write Database) charakterisiert. Mit der Meldung XBTB aus der Schicht 3 wird an die vermittlungstechnische Komponente (CP) gemeldet, daß der Port betriebsbereit ist. Die Schicht 3 wechselt in den Zustand "Port ist in Betrieb". Bei der Inbetriebnahme der teilnehmerseitigen Schnittstelle (S_{O}-Bus) ist also das Kriterium für eine erfolgreich abgeschlossene Inbetriebnahme der Ablauf des Zeitgliedes ZG1. Bei einer erfolglosen Portinbetriebnahme würde der Timer ZG2 für die Überwachung der Schicht L1 ablaufen und das Zeitglied ZG1 durch eine Meldung DL REL IN (Data Link Release Indication) gestoppt werden. Durch eine Meldung DL LOCK an die Schicht 2 würde diese dann in den gesperrten Zustand wechseln. Im Falle einer erfolglosen Portinbetriebnahme wird nach einer gewissen Wartezeit, z.B. 30 Sekunden, eine Inbetriebnahme mit der jeweils anderen Betriebsart, in diesem Beispiel also mit der Betriebsart "Amtsanschluß", vorgenommen werden. Zu diesem Zweck stellt der sicherheits- und betriebstechnische Prozeß STB die entsprechenden Konfigurierungsdaten bereit.

Wesentlich für die automatische Erkennung und Inbetriebnahme der S_{O}-Schnittstelle als amtsseitige oder als teilnehmerseitige Schnittstelle ist die Tatsache, daß der sicherheits- und betriebstechnische Prozeß STB die Inbetriebnahme anstößt, daß diese Inbetriebnahme in einen Zwischenzustand wechselt und versucht wird, verschiedene Schnittstellenkonfigurationen zu aktivieren. Aufgrund der im Protokoll spezifizierten Reaktionen leitet man ab, ob die Schnittstelle in der amtsseitigen (Userside) oder in der teilnehmerseitigen (Networkside)-Konfiguration eingesetzt ist. Die aus diesen Reaktionen gewonnenen Rückschlüsse werden dazu verwendet, mit dem Erkennen der jeweiligen Betriebsart die Schnittstelle automatisch in Betrieb zu nehmen.

## Patentansprüche

1. Verfahren zur Initialisierung von unterschiedlichen Übertragungswegen (AL, ASL) zuzuordnenden Schnittstellen (S_{O}) in einem programmgesteuerten Kommunikationssystem (TK), insbesondere in einem diensteintegrierenden digitalen Telekommunikationssystem, mit einem die Vermittlung, Signalisierung und die Leistungsmerkmale des Kommunikationssystems steuernden bzw. koordinierenden Mikroprozessorsystems (MS), das durch einen es repräsentierenden Mikroprozessor (MP) und durch u.a. anschluß- und gerätebezogene Informationen, wie z.B. Informationen über Anschlußkonstellationen, Berechtigungen und Dienste sowie über physikalische Funktionen wie die Art der Schnittstellen speichernden Speichereinheiten (RAM, ROM, EEPROM) gebildet ist und wobei die Funktionskomponenten bzw. Schnittstellen des Kommunikationssystems an ein durch Adreß-, Daten- und Steuerleitungen gebildetes, lokalen Bussystem (BS) angeschlossen sind,
**dadurch gekennzeichnet,**
**daß** unter der Voraussetzung, daß eine in Betrieb zu nehmende Schnittstelle (S_{O}) abhängig von dem daran angeschlossenen Übertragungsweg (AL, ASL) mindestens in einer endgeräte-orientierten und einer kommunikationsnetz-orientierten Betriebsart einsetzbar ist, nach dem Hochlauf des Kommunikationssystems (TK) durch das Mikroprozessorsystem (MS) zunächst die Initialisierung der Schnittstelle (S_{O}) in der einen Betriebsart vorgenommen und überprüft wird, ob die sich ergebenden Kommunikationsprozesse ihrer Art nach dem für diese aktuelle Betriebsart zugeordneten Kommunikationsprotokoll entsprechen, daß sofern dies der Fall ist, die Schnittstelle (S_{O}) entsprechend dieser automatisch als zutreffend erkannten Betriebsart automatisch endgültig konfiguriert und in der Speichereinheit (RAM, EEPROM) als solche abgespeichert wird, daß in den Fällen, in denen dies nicht zutrifft, automatisch die Initialisierung der Schnittstelle in der anderen Betriebsart vorgenommen und in gleicher Weise wie bei der erstgenannten Betriebsart vorgegangen wird und daß die geschilderten Vorgänge in Bezug auf weitere Betriebsarten zumindest solange wiederholt werden, bis sämtliche Betriebsarten berücksichtigt sind.

2. Verfahren nach Anspruch 1, **dadurch gekennzeichnet, daß** in den Fällen, in denen dabei keine der möglichen Betriebsarten als tatsächlich zutreffend erkannt wird, die genannten Vorgänge zur automatischen Erkennung und Inbetriebnahme der Schnittstelle zyklisch erneut durch das Mikroprozessorsystem (MS) gestartet werden.

3. Verfahren nach Anspruch 2, **dadurch gekennzeichnet, daß** in dem Zeitraum zwischen den zyklischen Wiederholungen die Schnittstelle (S_{O}) in der höchstwahrscheinlichen Betriebs- bzw. Anschlußart initialisiert ist.

4. Verfahren nach einem der Ansprüche 1 oder 2, **dadurch gekennzeichnet, daß** auch bei einer als gültig erkannten und abgespeicherten Betriebsart eine zyklische Wiederholung der Überprüfung vorgenommen wird und daß diese Überprüfung im Rahmen der automatischen Erkennung der Schnittstelle zunächst jeweils mit dieser betreffenden Betriebsart gestartet wird.

5. Verfahren nach einem der Ansprüche 1 bis 4, **dadurch gekennzeichnet, daß** die Schnittstelle durch eine standardisierte ISDN-Basisschnittstelle (S_{O}-Schnittstelle) realisiert ist und daß über den entsprechenden Übertragungsweg in der einen Betriebsart die ISDN-Anschlüsse von Kommunikationsnetzen (ISDN-PSTN) und in der anderen Betriebsart ISDN-Kommunikationsendgeräte anschließbar sind.

6. Verfahren nach Anspruch 5, **dadurch gekennzeichnet, daß** die ISDN-Basisschnittstelle (S_{O}) in einem als integrierten Telekommunikationsschaltkreis ausgebildeten ISDN-Basisanschlußeinheit (ISAC) realisiert wird.

7. Verfahren nach Anspruch 6, **dadurch gekennzeichnet, daß** die Basisanschlußeinheit mit dem Bussystem (BS) verbunden ist und für jede Schnittstellen-Betriebsart eine individuelle Ansteuerleitung (ML1, ML2) zur Einstellung des jeweiligen Betriebsmodus vorgesehen ist.

## Claims

1. Method for initializing interfaces (Sₒ) which are to be allocated to different transmission paths (AL, ASL) in a programme-controlled communications system (TK), in particular in an integrated services digital telecommunications system, having a microprocessor system (MS) which controls and coordinates the switching, signalling and the service features of the communications system and which is formed by a microprocessor (MP) which represents it and by, inter alia, line- and device-related information, such as information relating to line combinations, authorizations and services and also relating to physical functions, such as the type of memory units (RAM, ROM, EEPROM) storing interfaces, and where the functional components and/or interfaces in the communications system are connected to a local bus system (BS) formed by address, data and control lines,
**characterized**
**in that**, assuming that, on the basis of the transmission path (AL, ASL) connected to it, an interface (Sₒ) to be put into operation can be used at least in a terminal-oriented mode of operation and in a communications-network-oriented mode of operation, then, when the communications system (TK) has started up, the microprocessor system (MS) first initializes the interface (Sₒ) in one mode of operation and checks whether the communication processes taking place correspond, according to their type, to the communication protocol allocated for this current mode of operation, in that, provided that this is the case, the interface (Sₒ) is automatically configured fully in line with this mode of operation automatically recognized as being valid and is stored as such in the memory unit (RAM, EEPROM), in that, in the cases in which this is not true, the interface is automatically initialized in the other mode of operation and the same procedure is used as in the first mode of operation mentioned, and in that the operations outlined are repeated for other modes of operation at least until all the modes of operation have been covered.

2. Method according to Claim 1, **characterized in that**, in the cases in which none of the possible modes of operation are recognized at the time as actually being valid, the said operations for automatically recognizing and putting the interface into operation are restarted cyclically by the microprocessor system (MS).

3. Method according to Claim 2, **characterized in that**, in the period of time between the cyclic repetitions, the interface (Sₒ) is initialized in the most likely mode of operation and connection.

4. Method according to one of Claims 1 or 2, **characterized in that** the check is repeated cyclically even for a mode of operation which has been recognized as being valid and has been stored, and **in that** this check within the context of automatic recognition of the interface is first started using this particular mode of operation in each case.

5. Method according to one of Claims 1 to 4, **characterized in that** the interface is produced by a standardized ISDN basic interface (Sₒ-interface), and **in that** the appropriate transmission path can be used in one mode of operation to connect the ISDN lines of communication networks (ISDN-PSTN) and in the other mode of operation to connect ISDN communication terminals.

6. Method according to Claim 5, **characterized in that** the ISDN basic interface (Sₒ) is produced in an ISDN basic access unit (ISAC) in the form of an integrated telecommunications circuit.

7. Method according to Claim 6, **characterized in that** the basic access unit is connected to the bus system (BS), and for each interface mode of operation an individual actuation line (ML1, ML2) is provided for setting the respective mode of operation.

## Revendications

1. Procédé destiné à initialiser des interfaces (Sₒ) à allouer à différentes voies de transmission (AL, ASL) dans un système de communication (TK) à commande programmée, notamment dans un système de télécommunication numérique à intégration des services, ayant un système à microprocesseur (MS), qui commande et coordonne la commutation, la signalisation et les caractéristiques d'exploitation et qui est formé par un microprocesseur (MP), qui le représente, et par des informations, entre autres, relatives aux accès et aux appareils, tel que, par exemple, des informations concernant les constellations d'accès, les catégories et les services, ainsi que les fonctions physiques telles que les unités de mémoire (RAM, ROM, EEPROM) qui mémorisent le type des interfaces et les composantes de fonctions et/ou les interfaces du système de communication étant raccordées à un système de bus (BS) local formé par des lignes d'adressage, de données et de commande,
**caractérisé par le fait**
**que**, à condition qu'une interface (Sₒ), que l'on veut mettre en service, peut être utilisée, en fonction de la voie de transmission (AL, ASL), qui lui est raccordée, au moins dans un mode d'exploitation orienté appareil terminal et dans un mode d'exploitation orienté réseau de communication, après la montée en cadence du système de communication (TK), le système à microprocesseur (MS) procède d'abord à l'initialisation de l'interface (Sₒ) dans l'un des modes d'exploitation et vérifie si les processus de communication, qui en résultent, satisfont, selon leur type, au protocole de communication affecté à ce mode actuel d'exploitation, que, dans la mesure où c'est le cas, l'interface (Sₒ) est automatiquement programmée définitivement conformément au mode d'exploitation reconnu automatiquement comme correct et est mémorisée en tant que telle dans l'unité de mémoire (RAM, EEPROM), que, chaque fois que ce n'est pas le cas, on procède automatiquement à l'initialisation de l'interface dans l'autre mode d'exploitation et qu'on procède de la même manière que pour le mode d'exploitation cité en premier et que les processus décrits sont répétés avec d'autres modes d'exploitation au moins aussi longtemps que l'ensemble des modes d'exploitation a été pris en considération.

2. Procédé selon la revendication 1 **caractérisé par le fait que**, dans les cas où, dans ce cadre, aucun des modes d'exploitation possibles n'est reconnu comme étant effectivement pertinent, les processus cités destinés à la détection et à la mise en service automatiques de l'interface, sont relancés cycliquement par le système à microprocesseur (MS).

3. Procédé selon la revendication 2 **caractérisé par le fait que**, pendant la période de temps qui sépare les répétitions cycliques, l'interface (Sₒ) est initialisée dans le mode d'exploitation et d'accès le plus probable.

4. Procédé selon l'une des revendication 1 ou 2 **caractérisé par le fait que**, même dans le cas d'un mode d'exploitation reconnu et mémorisé comme valable, on procède à une répétition cyclique de la vérification et que cette vérification est d'abord lancée, dans le cadre de la détection automatique de l'interface, dans chaque cas avec ce mode d'exploitation pertinent.

5. Procédé selon l'une des revendication 1 à 4 **caractérisé par le fait que** l'interface est réalisée par une interface RNIS de base standardisée (interface Sₒ) et que, par l'intermédiaire de la voie de communication correspondante, dans l'un des modes d'exploitation, les raccordements RNIS de réseaux de communication (ISDN-PSTN) peuvent être raccordés et, dans l'autre mode d'exploitation, des appareils terminaux RNIS de communication.

6. Procédé selon la revendication 5 **caractérisé par le fait que** l'interface RNIS de base (Sₒ) est réalisée dans une unité RNIS d'accès de base (ISAC) conçue sous la forme d'un circuit intégré de télécommunication.

7. Procédé selon la revendication 6 **caractérisé par le fait que** l'unité d'accès de base est connectée sur le système de bus (BS) et, pour chaque mode d'exploitation d'interface, une ligne individuelle de commande (ML1, ML2) est prévue pour le réglage du mode d'exploitation respectif.
